# EUROPEAN PATENT SPECIFICATION

(11) **EP 4 339 486 B1**
(45) Date of publication and mention of the grant of the patent: **16.09.2026**
(21) Application number: 22944033.4
(22) Date of filing: 31.10.2022
(51) Int. Cl.: F16H 37/12, F16H 3/44, F16H 37/06, F16H 37/04, F16H 57/08

(54) **GEAR SHIFTING DEVICE**
GANGSCHALTVORRICHTUNG
DISPOSITIF DE CHANGEMENT DE VITESSE

(30) Priority: 28.06.2022 CN 202210749831
(43) Date of publication of application: 20.03.2024
(73) Proprietor: CICT Mobile Communication Technology Co., Ltd., Canglong Island, Jiangxia District Wuhan, Hubei 430205 (CN)
(72) Inventor: WU, Han, Wuhan, Hubei 430205 (CN); WU, Yangtao, Wuhan, Hubei 430205 (CN)
(74) Representative: Studio Torta S.p.A.
(86) International application number: PCT/CN2022/128574
(87) International publication number: WO 2024/000965

(56) References cited:
- CN-A- 105 508 518
- CN-A- 109 244 671
- CN-A- 109 244 672
- CN-A- 114 658 814
- CN-A- 114 658 814
- CN-A- 115 289 190
- CN-U- 206 673 116
- CN-U- 208 057 838
- US-A1- 2002 091 030
- US-A1- 2002 115 524

## Description

### TECHNICAL FIELD

The present invention relates to the field of antenna equipment, in particular to an antenna switching apparatus.

### BACKGROUND

A base station (that is, a public mobile communication base station) is an interface device for mobile devices to access the Internet, and is also a form of a radio station. The base station refers to a radio transceiver station that transmits information with a mobile phone terminal through a mobile communication switching center within a certain radio coverage area. Both the base station and the terminal transmit and receive signals through a medium of antennas.

With the continuous increase in the number of mobile terminals, the demand for antennas of a mobile communication base station is also growing. Since resources of a mobile base station are limited, it becomes a trend to integrate a plurality of antennas together. For a multi-band antenna, a traditional electrically regulating method is that adopting a downtilt angle regulation apparatus in antennas for each frequency band, that is, a multi-band antenna requires a plurality of downtilt angle regulation apparatuses, which are controlled and regulated by a plurality of motors. However, separate regulations of the plurality of regulation apparatuses causes the base station to be over-sized and costly.

CN206673116U, which is the basis for the two part form, provides a switch selecting arrangement, it includes main drive assembly, driven assembly and promotes the subassembly, main drive assembly includes the driving shaft, and is connected and by driving shaft driven driving gear with the driving shaft, driven assembly is including the driven gear who is used for forming the effect of being connected with arbitrary one power output shaft, promote the subassembly include with power output shaft corresponds the push rod that sets up. In addition, CN206673116U also provides an inclination angle measuring apparatus under the antenna to and antenna. Because the utility model discloses only adopt an output power, a control circuit to reducing motor, control circuit's supporting quantity, thereby having simplified the system, reduced circuit fault's emergence, reduce production and cost of maintenance, it is long-pending to reduce antenna body simultaneously, does benefit to the miniaturized design of system.

CN114658814A provides a gear shifting adjusting device and a base station antenna. The gear shifting adjusting device comprises a mounting base and a plurality of output pieces, and each output piece is used for forming a gear; the gear shifting mechanism comprises a planetary support and a planetary gear which are arranged in the mounting cavity, the revolution movement stroke of the planetary gear is used for switching and selecting the corresponding output piece, and the rotation movement stroke of the planetary gear is used for driving the corresponding output piece to move; the locking mechanism comprises a first locking structure and a second locking structure which are movably arranged on the mounting base, the first locking structure is used for locking the planetary support, and the second locking structure is used for locking the movement of the output pieces; and the driving mechanism is used for driving the gear shifting mechanism to move. The gear shifting adjusting device and the base station antenna provided by the invention aim at solving the problems that a traditional antenna transmission device is relatively complex in transmission, relatively large in occupied space and relatively high in cost.

### SUMMARY

The present invention provides an antenna switching apparatus, , as set out in the annexed claims, which solves the problem of an oversized base station, and miniaturizes the switching apparatus. Preferred embodiments are laid down in the dependent claims.

In particular, in the antenna switching apparatus provided by the present invention, when antenna switching is required, the planetary gear moves to the revolution portion, the planetary gear, the planetary carrier and the fixed gear ring form a revolution gear train together, to drive the sun gear to rotate. The planetary gear revolves around the sun gear, the planetary gear moves to the required position, and then the planetary gear is controlled to switch to the constant-rotation portion, and the planetary gear is in contact with an external control structure. In this case, the sun gear continues to rotate, and the planetary gear rotates in place to transmit the power of the sun gear to a regulation and control device of the antenna. Through the cooperation between the sun gear and the planetary gear, the antenna switching apparatus simultaneously complete position selection and positioning regulation only by switching the position of the planetary gear, which reduces costs and has a compact structure without providing too many regulation apparatuses corresponding to a plurality of antennas.

### BRIEF DESCRIPTION OF DRAWINGS

FIG. 1 is a perspective exploded schematic structural diagram of an embodiment of an antenna switching apparatus according to the present application;
FIG. 2 is a perspective schematic structural diagram of an embodiment of the fixed gear ring in FIG. 1;
FIG. 3 is a perspective schematic structural diagram of an embodiment of the planetary carrier in FIG. 1;
FIG. 4 is a perspective schematic structural diagram of an embodiment of the planetary gear in FIG. 1;
FIG. 5 is a perspective exploded schematic structural diagram of an embodiment of an antenna switching apparatus including a jacking structure according to the present application;
FIG. 6 is a perspective schematic structural diagram showing the jacking structure in FIG. 5 in operation;
FIG. 7 is a perspective schematic structural diagram of an embodiment of the jacking structure in FIG. 5;
FIG. 8 is a perspective schematic structural diagram of an embodiment of the screw rod slider block in FIG. 5;
FIG. 9 is a perspective exploded schematic structural diagram of another embodiment of an antenna switching apparatus according to the present application;
FIG. 10 is a bottom schematic structural diagram of the mounting plate in FIG. 9;
FIG. 11 is a perspective schematic structural diagram of the bearing column in FIG. 9;
FIG. 12 is a perspective schematic structural diagram of the rotation stopper in FIG. 9; and
FIG. 13 is a perspective exploded schematic structural diagram of a specific embodiment of an antenna switching apparatus according to the present application.

Reference signs:
100: antenna switching apparatus; 1: planetary carrier; 11: clamping bottom plate; 111: first through hole; 12: clamping cover plate; 121: second through hole; 13: matching bump; 2: sun gear; 3: planetary gear; 4: fixed gear ring; 41: gear ring bottom plate; 42: positioning bump; 5: rotating shaft; 61: elastic member; 62: jacking rod; 631: drive screw rod; 632: screw rod slider block; 6331: transmission gear; 6332: drive gear; 6333: first drive motor; 7: regulation geared column; 8: mounting plate; 9: bearing column; 91: rotation-stop teeth; 101: rotation stopper; 102: ejecting bump; 110: second drive motor.

### DETAILED DESCRIPTION OF THE EMBODIMENTS

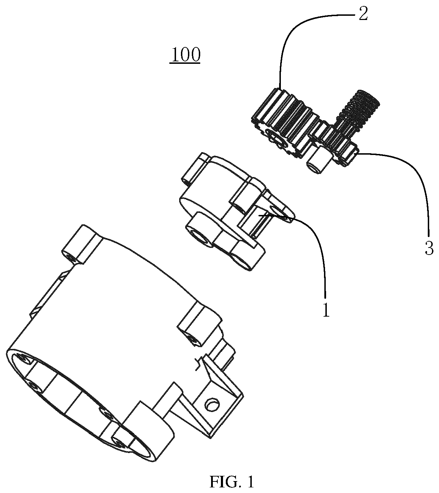

Referring to FIG. 1, the present application provides an antenna switching apparatus 100 including: a planetary carrier 1, a sun gear 2, a planetary gear 3 and a fixed gear ring 4. The planetary carrier 1 has a drive end and a rotary end disposed oppositely. The sun gear 2 has an axis extending along a first direction, the sun gear 2 is rotatably mounted to the drive end along the axis of the sun gear, and a revolution portion and a constant-rotation portion are formed sequentially at a lateral flank of the sun gear 2 along the first direction. The planetary gear 3 has an axis extending along the first direction, the planetary gear 3 rotates along the axis of the planetary gear, is movably mounted to the rotary end along the first direction and is engaged with the sun gear 2, and the planetary gear 3 is movable to the revolution portion or the constant-rotation portion along the first direction. The fixed gear ring 4 is provided corresponding to the revolution portion, the planetary gear 3 moves to the revolution portion and is engaged with the fixed gear ring 4, and further moves to the constant-rotation portion and is disengaged from the fixed gear ring 4.

In the antenna switching apparatus 100 provided by the present application, when antenna switching is required, the planetary gear 3 moves to the revolution portion, the planetary gear 3, the planetary carrier 1 and the fixed gear ring 4 form a revolution gear train together, to drive the sun gear 2 to rotate. The planetary gear 3 revolves around the sun gear 2, the planetary gear 3 moves to the required position, and then the planetary gear 3 is controlled to switch to the constant-rotation portion, and the planetary gear 3 is in contact with an external control structure. In this case, the sun gear 2 continues to rotate, and the planetary gear 3 rotates in place to transmit the power of the sun gear 2 to a regulation and control device of the antenna. Through the cooperation between the sun gear 2 and the planetary gear 3, the antenna switching apparatus simultaneously complete position selection and positioning regulation only by switching the position of the planetary gear 3, which reduces costs and has a compact structure without providing too many regulation apparatuses corresponding to a plurality of antennas.

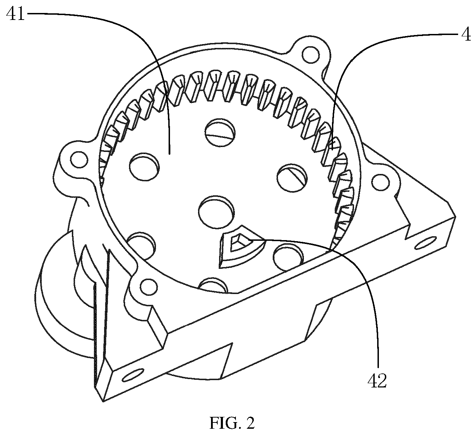

In the present embodiment, referring to FIG. 2, to facilitate the installation of the sun gear, the antenna switching apparatus 100 further includes a gear ring bottom plate 41 on which the fixed gear ring 4 is fixedly mounted, and the drive end is rotationally mounted to a center position of the gear ring bottom plate 41. This facilitates the cooperation between the sun gear 2 and the fixed gear ring 4, and avoids deviation during installation.

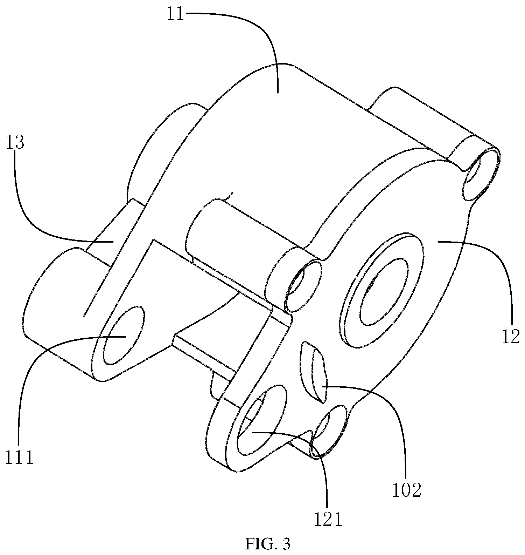

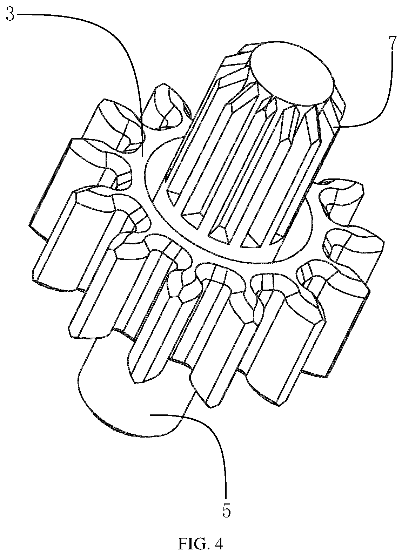

Furthermore, referring to FIG. 3 to FIG. 4, the planetary carrier 1 includes a clamping bottom plate 11 and a clamping cover plate 12 arranged at intervals along the first direction, and the sun gear 2 is located between the clamping bottom plate 11 and the clamping cover plate 12. The antenna switching apparatus 100 further includes a rotating shaft 5 and a jacking structure. The rotating shaft 5 extends along the first direction, the rotating shaft 5 is provided between the clamping bottom plate 11 and the clamping cover plate 12, the rotating shaft 5 rotates along an axis of the rotating shaft and is movably mounted to the rotary end along the first direction, and the planetary gear 53 is fixedly mounted on the rotating shaft 5. The jacking structure is used for driving the rotating shaft 5 to be movable along the first direction. In the present embodiment, the sun gear 2 is mounted between the clamping bottom plate 11 and the clamping cover plate 12. To facilitate the movement of the planetary gear 3 along the first direction, the planetary gear 3 is fixedly mounted on the rotating shaft 5, and the movement of the planetary gear 3 is controlled by allowing the rotating shaft 5 to move along the first direction to ensure the stability during the movement of the planetary gear 3.

It should be noted that, to facilitate the positioning of the planetary carrier 1, a positioning bump 42 is provided convexly on the gear ring bottom plate 41. A matching bump 13 is provided on the clamping bottom plate 11 corresponding to the positioning bump 42, and the matching bump 13 and a side wall surface of the positioning bump 42 abut against each other for positioning.

It should be noted that the jacking structure has various implementations. For example, a drive cylinder is provided on the clamping bottom plate, and the rotating shaft 5 is controlled to move along the first direction by the drive cylinder.

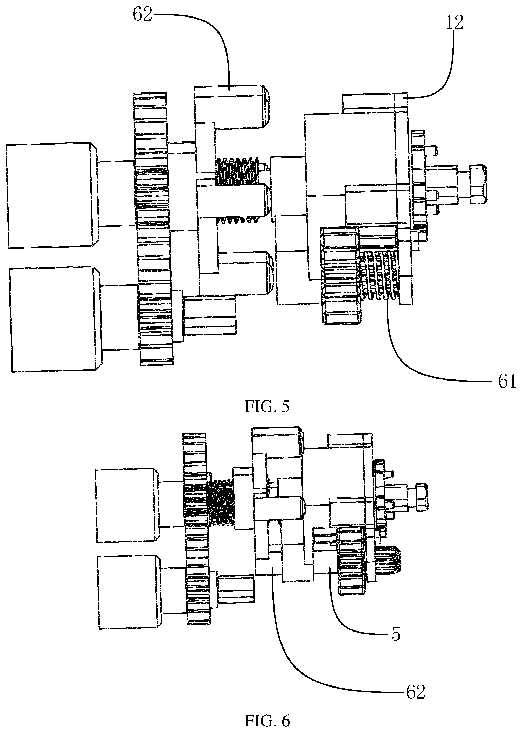

Furthermore, referring to FIG. 5 and FIG. 6, the clamping bottom plate 11 is provided with a first through hole 111 corresponding to the rotating shaft 5. The jacking structure includes an elastic member 61, a jacking rod 62 and a drive device. The elastic member 61 is provided between the planetary gear 3 and an opposite end surface of the clamping cover plate 12 to drive the rotating shaft 5 to move towards the clamping bottom plate 11. The jacking rod 62 is provided on a side of the planetary carrier 1 adjacent to the clamping bottom plate 11 and corresponding to the first through hole 111. The jacking rod is provided movably along the first direction to abut against the rotating shaft 5 through the first through hole 111 to drive the rotating shaft 5 to move towards the clamping cover plate 12. The drive device is used for driving the jacking rod 62 to move. In the present embodiment, the elastic member 61 and the jacking rod 62 respectively control the movement of the rotating shaft 5 in different directions. The structure is simple and it can ensure that the planetary gear 3 is automatically driven to fall into the revolution portion by the rotating shaft 5 when no force is applied on the rotating shaft 5; when regulation is required, the planetary gear 3 is jacked up by the rotating shaft 5 and enters the constant-rotation portion to perform constant-rotation regulation at the required position.

It should be noted that the elastic member can be provided in various ways. For example, the elastic member is provided as a spring. The spring is sleeved on the rotating shaft 5 to drive the rotating shaft 5 to move towards the clamping bottom plate 11.

In addition, in the present embodiment, a plurality of jacking rods 62 are provided, and the plurality of jacking rods 62 are arranged at intervals along a rotation path of the planetary gear 3, and the planetary gear 3 in different positions can drive the rotating shaft 5 to move.

Similarly, ways to drive the jacking rod 62 to move are various. For example, the jacking rod 62 is controlled through a cylinder.

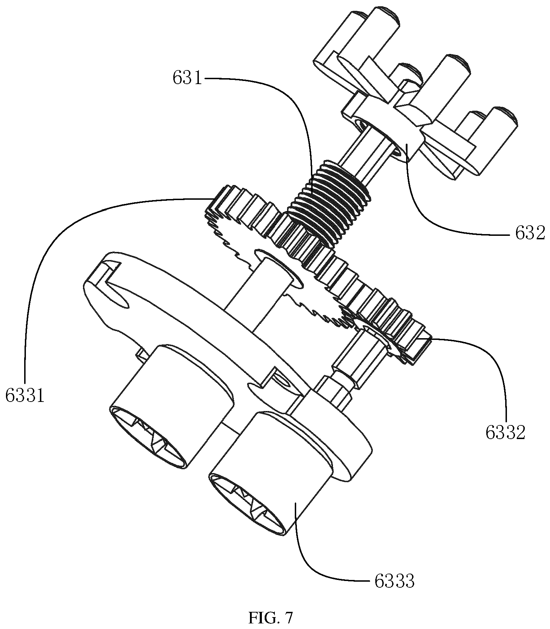

Referring to FIG. 7, the drive device includes a drive screw rod 631, a screw rod slider block 632 and a drive assembly. The drive screw rod 631 extends along the first direction. The screw rod slider block threadedly penetrates through the drive screw rod 631, and the jacking rod 62 is mounted on the screw rod slider block 632. The drive assembly is used for driving the drive screw rod 631 to rotate to drive the screw rod slider block 632 to move in the first direction. In the present embodiment, the screw rod slider block 632 is controlled to move linearly through the rotation of the drive screw rod 631. The movement is simple, stable and controllable, the structure is compact, and it is convenient to control a plurality of jacking rods to move simultaneously. There is no need to provide a plurality of drivers, which has reduced the installation costs and can compress occupied space.

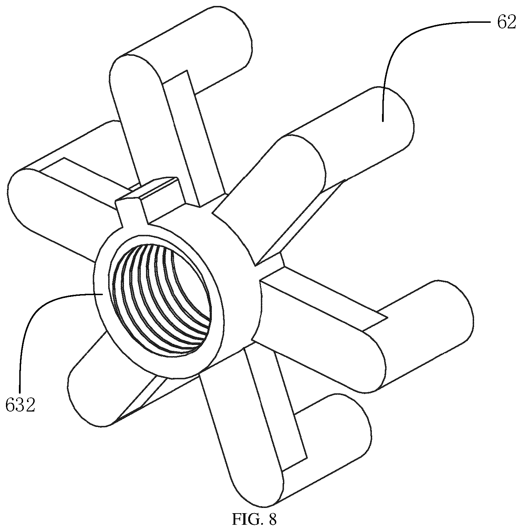

It should be noted that, referring to FIG. 8, in the present embodiment, a plurality of jacking rods 62 are provided, and fixedly mounted on the screw rod slider block 632 to simultaneously control the movement of the plurality of jacking rods 62.

It should be noted that the drive assembly can be arranged in various ways. For example, the drive screw rod 631 is directly connected to a motor, and the drive screw rod 631 is driven to rotate through the motor.

In the present embodiment, the drive assembly includes a transmission gear 6331, a drive gear 6332 and a first drive motor 6333. The transmission gear 6331 has a transmission axis extending along the first direction, the transmission gear 6331 is provided rotatably along the transmission axis, and the drive screw rod 631 is fixedly mounted to the transmission gear 6331. The drive gear 6332 is engaged with the transmission gear 6331. The first drive motor 6333 is used for driving the drive gear 6332 to rotate to drive the transmission gear 6331 to rotate. In the present embodiment, the rotation of the first drive motor 6333 is transmitted to the drive screw rod 631 through gear connection, which facilitates the installation of the drive assembly and prevents all components from extending sequentially along the first direction, which will result in insufficient internal installation space.

Ways for the planetary gear 3 to regulate the external antenna structure are various. For example, the planetary gear 3 is directly connected to the external antenna structure, and the planetary gear 3 rotates to drive the external antenna structure to rotate for regulating. Alternatively, the planetary gear 3 is provided with a regulation lifting rod, etc., and the position of the external antenna is regulated through the ejection and retraction action of the lifting rod.

In the present embodiment, the clamping cover plate 12 is provided with a second through hole 121 corresponding to the rotating shaft 5. The antenna switching apparatus 100 further includes a regulation geared column 7, a plurality of transmission teeth are formed on an outer surface of the regulation geared column 7, and the regulation geared column 7 movably penetrates through second through hole 121 and is fixedly connected to the rotating shaft. The rotating shaft 5 drives the regulation geared column 7 to rotate and move along the first direction. In the present embodiment, to facilitate the regulation of the antenna, the regulation geared column 7 is provided on the rotating shaft 5, and the rotation of the planetary gear 3 is transmitted through the regulation geared column 7, without any additional regulation device provided on the planetary gear 3, which prevents the planetary gear 3 from being engaged with a plurality of components simultaneously, causing inability to regulate the transmission efficiency. The antenna is regulated still through rotation, costs are decreased, and the volume of the antenna switching apparatus 100 is reduced.

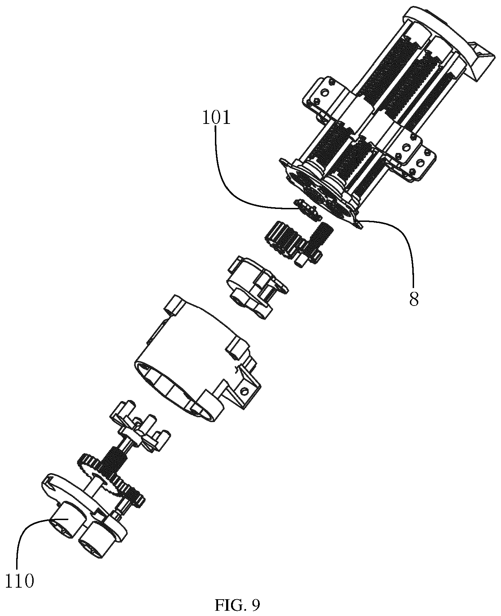

Further, referring to FIG. 9 to FIG. 10, the antenna switching apparatus 100 further includes a mounting plate 8 and a bearing column 9. The mounting plate 8 is mounted to a side of the planetary carrier 1 adjacent to the clamping cover plate12. The mounting plate 8 is provided with a plurality of mounting holes and the plurality of mounting holes are provided at intervals corresponding to a rotation path of the planetary gear 3. A plurality of bearing columns 9 are provided corresponding to the mounting holes, the plurality of the bearing columns 9 are rotatably mounted in the plurality of mounting holes, correspondingly. A regulation groove is concavely provided on an end face of each bearing column 9 facing the planetary carrier 1, an inner wall of the regulation groove is formed with a matching tooth, and the matching tooth is used to rotate in cooperation with the transmission teeth. The regulation geared column 7 is movable along the first direction in the regulation groove to drive each bearing column 9 to rotate. In the present embodiment, to prevent the regulation geared column 7 from interfering with other bearing columns 9 when the bearing column 9 is driven, the regulation groove is provided on the bearing column 9. The regulation geared column 7 extends into the regulation groove and is matched with the regulation groove. When the regulation geared column 7 rotates, tit only drives the corresponding bearing column 9 and the regulation geared column 7 is limited in the regulation groove and does not interfere with the surrounding bearing column 9.

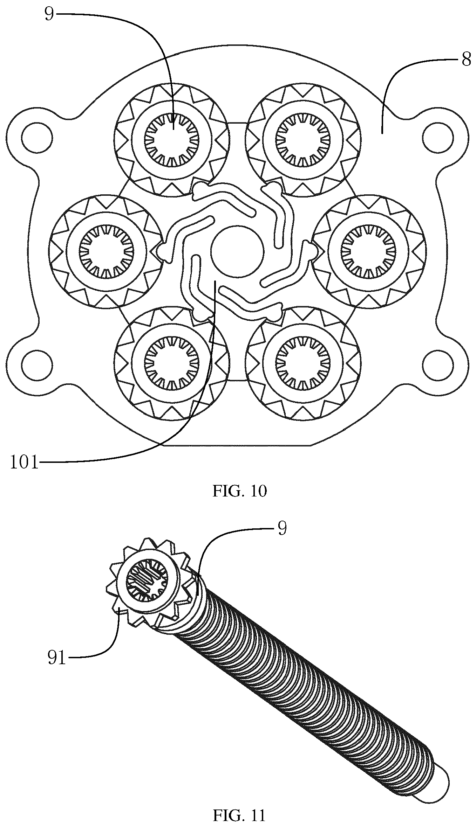

In the present embodiment, referring to FIG. 11, the antenna switching apparatus 100 further includes an antenna screw rod. The antenna screw rod is mounted to an end of the bearing column 9 facing away from the planetary carrier 1. An antenna slider is provided on the antenna screw rod, and the antenna slider is used to carry an external antenna. In the present embodiment, the rotation of the bearing column 9 drives the antenna screw rod to rotate, to regulate the position of the antenna slider, and further regulate the position of the external antenna.

The antenna switching apparatus 100 further includes a rotation-stop structure, and the rotation-stop structure is used to limit the rotation of the bearing column 9. As such, the position of the bearing column 9 can be maintained when the bearing column 9 does not need to rotate.

It should be noted that the rotation-stop structure can be implemented in a variety of ways, such as a clamping member. When the bearing column 9 does not need to rotate, the bearing column 9 is clamped by the clamping member to avoid rotation. Alternatively, an interference claw is provided between the bearing column 9 and the mounting hole to prevent the bearing column 9 from rotating through interference installation.

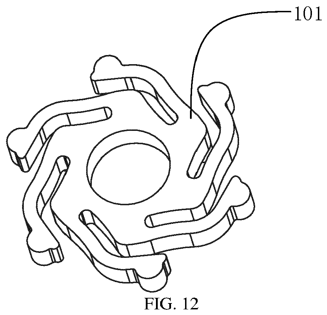

Referring to FIG. 12, in the present embodiment, an end of the bearing column 9 facing the planetary carrier 1 is exposed outside the mounting plate 8, and a side wall of the end of the bearing column 9 exposed outside the mounting plate 8 is provided with a plurality of rotation-stop teeth 91. The rotation-stop structure includes a rotation stopper 101 and an ejecting bump 102. The rotation stopper 101 is mounted on the mounting plate 8 and located between the plurality of bearing columns 9. The rotation stopper 101 is provided with a plurality of elastic arms corresponding to the plurality of bearing columns 9 and free ends of each of the plurality of elastic arms extend within each rotation-stop teeth 91 towards the bearing column 9. The ejecting bump 102 is mounted on an end surface of the clamping cover plate 12 facing the mounting plate 8 to eject the elastic arms towards the mounting plate 8 and the elastic arms are disengaged from the rotation-stop teeth 91. When the bearing column 9 does not need to rotate, the elastic arm naturally extends into the rotation-stop teeth 91 and the bearing column 9 is engaged and fixed and cannot rotate. When the bearing column 9 needs to rotate, the planetary carrier 1 rotates to the position of the corresponding bearing column 9, the ejecting bump 102 on the clamping cover plate 12 ejects the elastic arm, the elastic arm is disengaged from the rotation-stop teeth 91. As such, the bearing column 9 can rotate freely.

The antenna switching apparatus 100 further includes a second drive motor 110, and the second drive motor 110 is used for driving the sun gear 2 to rotate.

It should be noted that, in an embodiment according to the present application, the jacking structure and the second drive motor 110 are provided simultaneously. In the present embodiment, the drive screw rod 631 is rotatably sleeved on an output shaft of the second drive motor 110 to save space.

The antenna switching apparatus 100 further includes a protective housing into which all the planetary carrier 1, the sun gear 2, the planetary gear 3 and the fixed gear ring 4 are mounted.

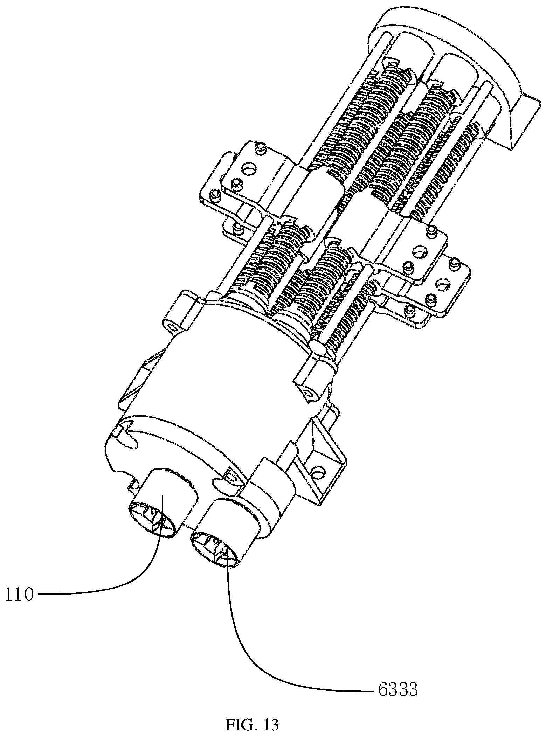

Referring to FIG. 13, based on the above-mentioned antenna switching apparatus 100, the present application provides a specific embodiment.

In the specific embodiment, when the antenna switching apparatus 100 is not activated, the matching bump 13 on the planetary carrier 1 abut against the positioning bump 42 on the gear ring bottom plate 41 and is in an initial position.

When different antennas need to be regulated respectively, the second drive motor 110 is driven to drive the sun gear 2 to rotate. As such, the planetary gear 3 is in the revolution portion under the action of the elastic member 61. The sun gear 2 rotates, the planetary gear 3 revolves around the sun gear 2 while rotating and is displaced to the corresponding bearing column 9 on the mounting plate 8.

After the planetary gear 3 moves to the corresponding position, the first drive motor 6333 is controlled to work and drive the drive screw rod 631 to rotate, the screw rod slider block 632 moves along the first direction, the jacking rod 62 is pushed to extend into the first through hole 111, abuts against the rotating shaft 5 and drives the rotating shaft 5 to move towards the clamping cover plate 12.

When the rotating shaft 5 moves, the regulation geared column 7 is pushed out of the second through hole, extends into the regulation groove of the bearing column 9, and is driven through the transmission teeth and the matching tooth. As such, the ejecting bump 102 on the planetary carrier 1 abuts against the elastic arm of the rotation stop 101, the elastic arm is disengaged from the rotation-stop tooth 91 is disengaged, and the bearing column 9 can rotate freely.

The second drive motor 110 is controlled to continue to rotate. The planetary gear 3 is in the constant-rotation portion. The planetary gear 3 begins to rotate and drives the bearing column 9 to rotate, and the antenna screw rod on the bearing column 9 rotates to regulate the antenna.

After the regulation of the antenna is completed, the first drive motor 6333 is controlled to rotate reversely and the planetary gear 3 returns to a revolution position. The position of the planetary gear 3 continues to be regulated by the second drive motor 110 to return to the initial position or continue with a subsequent regulation.

## Claims

1. An antenna switching apparatus (100) comprising:
a planetary carrier (1), having a drive end and a rotary end disposed oppositely;
a sun gear (2), having an axis extending along a first direction, wherein the sun gear (2) is rotatably mounted to the drive end along the axis of the sun gear (2), and a revolution portion and a constant-rotation portion are formed sequentially at a lateral flank of the sun gear (2) along the first direction;
a planetary gear (3), having an axis extending along the first direction, wherein the planetary gear (3) rotates along the axis of the planetary gear (3), is movably mounted to the rotary end of the planetary carrier (1) along the first direction the revolution portion or the constant-rotation portion of the sun gear (2) and is engaged with the sun gear (2); and
a fixed gear ring (4), provided corresponding to the revolution portion, wherein the planetary gear (3) is configured to be moved to the revolution portion for being engaged with the fixed gear ring (4), and further is configured to be moved to the constant-rotation portion for being disengaged from the fixed gear ring (4),
wherein the planetary carrier (1) comprises a clamping bottom plate (11) and a clamping cover plate (12)
arranged at intervals along the first direction, wherein the sun gear (2) is located between the clamping bottom plate (11) and the clamping cover plate (12),
wherein the antenna switching apparatus (100) further comprises:
a rotating shaft (5), extending along the first direction, wherein the rotating shaft (5) is provided between the clamping bottom plate (11) and the clamping cover plate (12), and rotates along an axis of the rotating shaft (5) and is movably mounted to the rotary end of the planet carrier (1) along the first direction and the planetary gear (3) is fixedly mounted on the rotating shaft (5); and
a jacking structure (61, 62), used for driving the rotating shaft (5) to be movable along the first direction,
wherein the clamping cover plate (12) is provided with a second through hole (121) corresponding to the rotating shaft (5),
**characterized in that**
the antenna switching apparatus (100) further comprises a regulation geared column (7), wherein a plurality of transmission teeth are formed on an outer surface of the regulation geared column (7), and the regulation geared column (7) movably penetrates through the second through hole (121) and is fixedly connected to the rotating shaft (5); and
the rotating shaft (5) drives the regulation geared column (7) to rotate and move along the first direction, and the antenna switching apparatus (100) further comprises:
a mounting plate (8), mounted to a side of the planetary carrier (1) adjacent to the clamping cover plate (12),
wherein the mounting plate (8) is provided with a plurality of mounting holes and the plurality of mounting holes are provided at intervals corresponding to a rotation path of the planetary gear (3); and the antenna switching apparatus (100) further comprises
a bearing column (9), wherein a plurality of bearing columns (9) are provided corresponding to the mounting holes, the plurality of the bearing columns (9) are rotatably mounted in the plurality of mounting holes correspondingly; and
an end face of each bearing column (9) facing the planetary carrier (1) is concavely provided with a regulation groove, an inner wall of the regulation groove is formed with a matching tooth, and the matching tooth is used to rotate in cooperation with the transmission teeth of the regulated geared column (7);
and the antenna switching apparatus (100) further comprises a rotation-stop structure (101, 102),
and the rotation-stop structure is used to limit the rotation of the bearing column (9),
wherein the regulation geared column (7) is movable along the first direction in the regulation groove to drive each bearing column (9) to rotate.

2. The antenna switching apparatus (100) of claim 1, wherein the clamping bottom plate (11) is provided with a first through hole (111) corresponding to the rotating shaft (5),
wherein the jacking structure comprises:
an elastic member (61), provided between the planetary gear (3) and an opposite end surface of the clamping cover plate to drive the rotating shaft (5) to move towards the clamping bottom plate (11);
a jacking rod (62), provided on a side of the planetary carrier (1) adjacent to the clamping bottom plate (11) and corresponding to the first through hole (111), wherein the jacking rod (62) is provided movably along the first direction to abut against rotating shaft (5) from the first through hole (111) to drive the rotating shaft (5) to move towards the clamping cover plate; and
a drive device, used for driving the jacking rod (62) to move.

3. The antenna switching apparatus (100) of claim 2, wherein the drive device comprises:
a drive screw rod (631), extending along the first direction;
a screw rod slider block (632), threadedly penetrating through the drive screw rod (631), the jacking rod (62) being mounted on the screw rod slider block (632); and
a drive assembly, used for driving the drive screw rod (631) to rotate to drive the screw rod slider block (632) to move in the first direction.

4. The antenna switching apparatus (100) of claim 3, wherein the drive assembly comprises:
a transmission gear (6331), having a transmission axis extending along the first direction, wherein the transmission gear (6331) is provided rotatably along the transmission axis, and the drive screw rod (631) is fixedly mounted to the transmission gear (6331);
a drive gear (6332), engaged with the transmission gear (6331); and
a first drive motor (6333), used for driving the drive gear (6332) to rotate to drive the transmission gear (6331) to rotate.

5. The antenna switching apparatus (100) of claim 1, wherein an end of the bearing column (9) facing the planetary carrier (1) is exposed outside the mounting plate (8), and a side wall of the end of the bearing column (9) exposed outside the mounting plate (8) is provided with a plurality of rotation-stop teeth (91),
wherein the rotation-stop structure comprises:
a rotation stopper (101), mounted on the mounting plate (8) and located between the plurality of bearing columns (9), wherein the rotation stopper (101) is provided with a plurality of elastic arms corresponding to the plurality of bearing columns (9), and free ends of each of the plurality of elastic arms extend within each rotation-stop teeth (91) towards the bearing column (9); and
an ejecting bump (102), mounted on an end surface of the clamping cover plate facing the mounting plate (8) to eject the elastic arms towards the mounting plate (8), and the elastic arms are disengaged from the rotation-stop teeth (91).

6. The antenna switching apparatus (100) of claim 1, further comprising a second drive motor (110), wherein the second drive motor (110) driving the sun gear (2) to rotate.

## Patentansprüche

1. Antennenschaltvorrichtung (100), umfassend:
einen Planetenträger (1), der ein Antriebsende und ein Drehende aufweist, die einander gegenüberliegend angeordnet sind;
ein Sonnenrad (2) mit einer Achse, die sich entlang einer ersten Richtung erstreckt, wobei das Sonnenrad (2) drehbar an dem Antriebsende entlang der Achse des Sonnenrads (2) montiert ist und ein Umdrehungsabschnitt und ein Konstantdrehungsabschnitt aufeinanderfolgend an einer seitlichen Flanke des Sonnenrads (2) entlang der ersten Richtung ausgebildet sind;
ein Planetengetriebe (3) mit einer Achse, die sich entlang der ersten Richtung erstreckt, wobei sich das Planetengetriebe (3) entlang der Achse des Planetengetriebes (3) dreht, beweglich an dem Drehende des Planetenträgers (1) entlang der ersten Richtung zu dem Umdrehungsabschnitt oder dem Konstantdrehungsabschnitt des Sonnenrads (2) montiert ist und mit dem Sonnenrad (2) in Eingriff steht; und
einen feststehenden Zahnkranz (4), der entsprechend dem Umdrehungsabschnitt vorgesehen ist, wobei das Planetengetriebe (3) so konfiguriert ist, dass es zum Drehabschnitt bewegt wird, um mit dem feststehenden Zahnkranz (4) in Eingriff gebracht zu werden, und ferner so konfiguriert ist, dass es zum Konstantdrehungsabschnitt bewegt wird, um vom feststehenden Zahnkranz (4) außer Eingriff gebracht zu werden,
wobei der Planetenträger (1) eine Klemm-Bodenplatte (11) und eine Klemm-Deckplatte (12) umfasst, die in Abständen entlang der ersten Richtung angeordnet sind, wobei das Sonnenrad (2) zwischen der Klemm-Bodenplatte (11) und der Klemm-Deckplatte (12) angeordnet ist,
wobei die Antennenschaltvorrichtung (100) ferner umfasst:
eine rotierende Welle (5), die sich entlang der ersten Richtung erstreckt, wobei die rotierende Welle (5) zwischen der Klemm-Bodenplatte (11) und der Klemm- Deckplatte (12) vorgesehen ist und sich entlang einer Achse der rotierenden Welle (5) dreht und beweglich an dem Drehende des Planetenträgers (1) entlang der ersten Richtung montiert ist und das Planetengetriebe (3) fest an der rotierenden Welle (5) montiert ist; und eine Vortriebsstruktur (61, 62), die zum Antreiben der rotierenden Welle (5) dient, um entlang der ersten Richtung beweglich zu sein,
wobei die Klemm-Deckplatte (12) mit einem zweiten Durchgangsloch (121) versehen ist, das der rotierenden Welle (5) entspricht,
**dadurch gekennzeichnet, dass**
die Antennenschaltvorrichtung (100) ferner eine Regulierungszahnradsäule (7) umfasst, wobei eine Vielzahl von Übertragungszähnen an einer Außenfläche der Regulierungszahnradsäule (7) ausgebildet ist und die Regulierungszahnradsäule (7) beweglich durch das zweite Durchgangsloch (121) hindurchtritt und fest mit der rotierenden Welle (5) verbunden ist; und
die rotierende Welle (5) die Regulierungszahnradsäule (7) antreibt, damit sie sich dreht und in die erste Richtung bewegt,
und die Antennenschaltvorrichtung (100) ferner umfasst:
eine Montageplatte (8), die an einer Seite des Planetenträgers (1) an die Klemm-Deckplatte (12) angrenzend angebracht ist,
wobei die Montageplatte (8) mit einer Vielzahl von Montagelöchern versehen ist und die Vielzahl von Montagelöchern in Abständen vorgesehen sind, die einem Rotationsweg des Planetengetriebes (3) entsprechen; und die Antennenschaltvorrichtung (100) ferner umfasst
eine Lagersäule (9), wobei eine Vielzahl von Lagersäulen (9) entsprechend den Montagelöchern vorgesehen sind, wobei die Vielzahl der Lagersäulen (9) entsprechend in der Vielzahl von Montagelöchern drehbar montiert sind; und
eine Endfläche jeder Lagersäule (9), die dem Planetenträger (1) zugewandt ist, konkav mit einer Regulierungsnut versehen ist, eine Innenwand der Regulierungsnut mit einem Anpassungszahn ausgebildet ist und der Anpassungszahn dazu verwendet wird, sich im Zusammenwirken mit den Übertragungszähnen der Regulierungszahnradsäule (7) zu drehen;
und die Antennenschaltvorrichtung (100) ferner eine Drehstopstruktur (101, 102) umfasst, und die Drehstopstruktur verwendet wird, um die Drehung der Lagersäule (9) zu begrenzen,
wobei die Regulierungszahnradsäule (7) entlang der ersten Richtung in der Regulierungsnut beweglich ist, um jede Lagersäule (9) in Drehung zu versetzen.

2. Antennenschaltvorrichtung (100) nach Anspruch 1, wobei die Klemm-Bodenplatte (11) mit einem ersten Durchgangsloch (111) versehen ist, das der rotierenden Welle (5) entspricht,
wobei die Vortriebsstruktur umfasst:
ein elastisches Element (61), das zwischen dem Planetengetriebe (3) und einer gegenüberliegenden Endfläche der Klemm-Deckplatte vorgesehen ist, um die rotierende Welle (5) anzutreiben, damit sie sich in Richtung der unteren Klemm-Bodenplatte (11) bewegt;
eine Vortriebsstange (62), die auf einer Seite des Planetenträgers (1) angrenzend an die Klemm-Bodenplatte (11) und entsprechend dem ersten Durchgangsloch (111) vorgesehen ist, wobei die Vortriebsstange (62) entlang der ersten Richtung beweglich vorgesehen ist, um gegen die sich rotierende Welle (5) von dem ersten Durchgangsloch (111) anzustoßen, um die sich rotierende Welle (5) anzutreiben, damit sie sich in Richtung der Klemm-Deckplatte bewegt; und
eine Antriebsvorrichtung, die dazu dient, die Vortriebsstange (62) zu bewegen.

3. Antennenschaltvorrichtung (100) nach Anspruch 2, wobei die Antriebsvorrichtung umfasst:
eine Antriebsspindelstange (631), die sich entlang der ersten Richtung erstreckt;
einen Spindelstangen-Gleitblock (632), der gewindemäßig durch die Antriebsspindelstange (631) hindurchgeht, wobei die Vortriebsstange (62) auf dem Spindelstangen-Gleitblock (632) montiert ist; und
eine Antriebsanordnung, die dazu dient, die Antriebsspindelstange (631) in Drehung zu versetzen, um den Spindelstangen-Gleitblock (632) in die erste Richtung zu bewegen.

4. Antennenschaltvorrichtung (100) nach Anspruch 3, wobei die Antriebsanordnung umfasst:
ein Übertragungszahnrad (6331) mit einer Übertragungsachse, die sich entlang der ersten Richtung erstreckt, wobei das Übertragungszahnrad (6331) entlang der Übertragungsachse drehbar bereitgestellt ist und die Antriebsspindelstange (631) fest an dem Übertragungszahnrad (6331) montiert ist;
ein Antriebszahnrad (6332), das mit dem Übertragungszahnrad (6331) in Eingriff steht; und
einen ersten Antriebsmotor (6333), der dazu dient, das Antriebszahnrad (6332) in Drehung zu versetzen, um das Übertragungszahnrad (6331) in Drehung zu versetzen.

5. Antennenschaltgerät (100) nach Anspruch 1, wobei ein dem Planetenträger (1) zugewandtes Ende der Lagersäule (9) außerhalb der Montageplatte (8) freiliegt und eine Seitenwand des außerhalb der Montageplatte (8) freiliegenden Endes der Lagersäule (9) mit einer Vielzahl von Drehstopzähnen (91) versehen ist,
wobei die Drehstopstruktur umfasst:
einen Drehstopper (101), der an der Montageplatte (8) montiert und zwischen der Vielzahl von Lagersäulen (9) angeordnet ist, wobei der Drehstopper (101) mit einer Vielzahl von elastischen Armen versehen ist, die der Vielzahl von Lagersäulen (9) entsprechen, und freie Enden jedes der Vielzahl von elastischen Armen sich innerhalb jedes Drehstopzahns (91) in Richtung der Lagersäule (9) erstrecken; und
einen Ausstoßhöcker (102), der an einer Endfläche der Klemm-Deckplatte montiert ist, die der Montageplatte (8) zugewandt ist, um die elastischen Arme in Richtung der Montageplatte (8) auszustoßen, und die elastischen Arme werden von den Drehstopzähnen (91) gelöst.

6. Antennenschaltvorrichtung (100) nach Anspruch 1, ferner umfassend einen zweiten Antriebsmotor (110), wobei der zweite Antriebsmotor (110) das Sonnenrad (2) in Drehung versetzt.

## Revendications

1. Dispositif de commutation d'antenne (100) comprenant :
un support planétaire (1) dont l'extrémité d'entraînement et l'extrémité rotative sont disposées de manière opposée ;
un planétaire (2), dont l'axe s'étend le long d'une première direction, le planétaire (2) étant monté en rotation sur l'extrémité d'entraînement le long de l'axe du planétaire (2), et une partie de révolution et une partie de rotation constante étant formées séquentiellement sur un flanc latéral du planétaire (2) le long de la première direction ;
un engrenage planétaire (3), ayant un axe s'étendant le long de la première direction, l'engrenage planétaire (3) tournant le long de l'axe de l'engrenage planétaire (3), étant monté de façon mobile à l'extrémité rotative du support planétaire (1) le long de la première direction jusqu'à la partie de révolution ou la partie de rotation constante du planétaire (2) et étant en prise avec le planétaire (2) ; et
une couronne à denture fixe (4), correspondant à la partie de révolution, l'engrenage planétaire (3) étant configuré pour être déplacé vers la partie de révolution afin d'être mis en prise avec la couronne à denture fixe (4), et étant en outre configuré pour être déplacé vers la partie de rotation constante afin d'être désengagé de la couronne à denture fixe (4),
le support planétaire (1) comprenant une plaque de fond de serrage (11) et une plaque de recouvrement de serrage (12) disposées à intervalles réguliers le long de la première direction, le planétaire (2) étant situé entre la plaque de fond de serrage (11) et la plaque de recouvrement de serrage (12),
le dispositif de commutation d'antenne (100) comprenant en outre :
un arbre rotatif (5), s'étendant le long de la première direction, l'arbre rotatif (5) étant prévu entre la plaque de fond de serrage (11) et la plaque de recouvrement de serrage (12), et tournant le long d'un axe de l'arbre rotatif (5) et étant monté de manière mobile à l'extrémité rotative du support planétaire (1) le long de la première direction et l'engrenage planétaire (3) étant monté de manière fixe sur l'arbre rotatif (5) ; et une structure de levage (61, 62), utilisée pour entraîner l'arbre rotatif (5) de manière à être mobile le long de la première direction,
la plaque de recouvrement de serrage (12) étant pourvue d'un second trou traversant (121) correspondant à l'arbre rotatif (5),
**caractérisé en ce que**
le dispositif de commutation d'antenne (100) comprend en outre une colonne à engrenage de réglage (7), une pluralité de dents de transmission étant formées sur une surface extérieure de la colonne à engrenage de réglage (7), et la colonne à engrenage de réglage (7) pénétrant de manière mobile à travers le second trou de passage (121) et étant reliée de manière fixe à l'arbre rotatif (5) ; et
l'arbre rotatif (5) entraînant la colonne à engrenage de réglage (7) à tourner et à se déplacer le long de la première direction,
et le dispositif de commutation d'antenne (100) comprend en outre :
une plaque de montage (8), montée sur un côté du support planétaire (1) adjacent à la plaque de recouvrement de serrage (12),
la plaque de montage (8) étant pourvue d'une pluralité de trous de montage et la pluralité de trous de montage étant prévus à des intervalles réguliers correspondant à une trajectoire de rotation de l'engrenage planétaire (3) ; et le dispositif de commutation d'antenne (100) comprend en outre
une colonne de palier (9), une pluralité de colonnes de palier (9) étant prévues en correspondance des trous de montage, la pluralité de colonnes de palier (9) étant montées de manière rotative dans la pluralité de trous de montage en correspondance ; et
une face d'extrémité de chaque colonne de palier (9) faisant face au support planétaire (1) étant de manière concave pourvue d'une rainure de réglage, une paroi intérieure de la rainure de réglage étant formée d'une dent d'adaptation, et la dent d'adaptation étant utilisée pour tourner en coopération avec les dents de transmission de la colonne à engrenage de réglage (7) ;
et le dispositif de commutation d'antenne (100) comprend en outre une structure d'arrêt de rotation (101, 102), et la structure d'arrêt de rotation est utilisée pour limiter la rotation de la colonne de palier (9),
la colonne à engrenage de réglage (7) étant mobile le long de la première direction dans la rainure de régulation pour entraîner la rotation de chaque colonne de palier (9).

2. Dispositif de commutation d'antenne (100) selon la revendication 1, la plaque de fond de serrage (11) étant pourvue d'un premier trou traversant (111) correspondant à l'arbre rotatif (5),
la structure de levage comprenant :
un élément élastique (61), placé entre l'engrenage planétaire (3) et une surface d'extrémité opposée de la plaque de recouvrement de serrage, pour entraîner l'arbre rotatif (5) à se déplacer vers la plaque de fond de serrage (11) ;
une tige de levage (62), prévue sur un côté du support planétaire (1) adjacent à la plaque de fond de serrage (11) et correspondant au premier trou de passage (111), la tige de levage (62) étant prévue de façon mobile le long de la première direction pour venir se mettre en butée contre l'arbre rotatif (5) à partir du premier trou traversant (111) afin d'entraîner l'arbre rotatif (5) à se déplacer vers la plaque de recouvrement de serrage ; et
un dispositif d'entraînement, utilisé pour entraîner le déplacement de la tige de levage (62).

3. Dispositif de commutation d'antenne (100) selon la revendication 2, le dispositif d'entraînement comprenant :
une tige de vis d'entraînement (631), s'étendant le long de la première direction ;
un bloc coulissant (632) de tige de vis, pénétrant de manière filetée à travers la tige de vis d'entraînement (631), la tige de levage (62) étant montée sur le bloc coulissant (632) de tige de vis ; et
un ensemble d'entraînement, utilisé pour entraîner la tige de la vis d'entraînement (631) à tourner pour entraîner le bloc coulissant (632) de tige de vis à se déplacer dans la première direction.

4. Dispositif de commutation d'antenne (100) selon la revendication 3, l'ensemble d'entraînement comprenant :
un engrenage de transmission (6331), ayant un axe de transmission s'étendant le long de la première direction, l'engrenage de transmission (6331) étant fourni de manière rotative le long de l'axe de transmission, et la tige de vis d'entraînement (631) étant montée de manière fixe sur l'engrenage de transmission (6331) ;
un engrenage d'entraînement (6332), mis en prise avec l'engrenage de transmission (6331) ; et
un premier moteur d'entraînement (6333), utilisé pour entraîner la rotation de l'engrenage d'entraînement (6332) afin d'entraîner la rotation de l'engrenage de transmission (6331).

5. Dispositif de commutation d'antenne (100) selon la revendication 1, une extrémité de la colonne de palier (9) faisant face au support planétaire (1) étant exposée à l'extérieur de la plaque de montage (8), et une paroi latérale de l'extrémité de la colonne de palier (9) exposée à l'extérieur de la plaque de montage (8) étant pourvue d'une pluralité de dents d'arrêt de rotation (91),
la structure d'arrêt de rotation comprenant :
une butée de rotation (101), montée sur la plaque de montage (8) et située entre la pluralité de colonnes de palier (9), la butée de rotation (101) étant pourvue d'une pluralité de bras élastiques correspondant à la pluralité de colonnes de palier (9), et les extrémités libres de chacun des bras de la pluralité de bras élastiques de la pluralité s'étendant à l'intérieur de chaque dent d'arrêt de rotation (91) vers la colonne de palier (9) ; et
une bosse d'éjection (102), montée sur une surface d'extrémité de la plaque de recouvrement de serrage faisant face à la plaque de montage (8) pour éjecter les bras élastiques vers la plaque de montage (8), et les bras élastiques sont désengagés des dents d'arrêt de rotation (91).

6. Dispositif de commutation d'antenne (100) selon la revendication 1, comprenant en outre un second moteur d'entraînement (110), le second moteur d'entraînement (110) entraînant la rotation du planétaire (2) .
